(19) Europäisches Patentamt

European Patent Office

Office européen des brevets

(11) Numéro de publication: **0 281 163**
**B1**

(12) **FASCICULE DE BREVET EUROPEEN**

(45) Date de publication du fascicule du brevet:
05.12.90

(21) Numéro de dépôt: 88200050.8

(22) Date de dépôt: 14.01.88

(51) Int. Cl.⁵: **B67D 1/00,** B67D 1/12

(54) Distributeur de doses de boisson.

(30) Priorité: 04.02.87 FR 8701883

(43) Date de publication de la demande:
07.09.88 Bulletin 88/36

(45) Mention de la délivrance du brevet:
05.12.90 Bulletin 90/49

(84) Etats contractants désignés:
AT BE CH DE ES FR GB GR IT LI LU NL SE

(56) Documents cités:
BE-A- 739 211
FR-A- 2 564 815
US-A- 2 770 394
US-A- 3 802 608
US-A- 4 467 943

(73) Titulaire: **Sartulairi, René, Villa Le Ginko Avenue de
Latécoère, F-31700 Cornebarrieu(FR)**

(72) Inventeur: **Sartulairi, René, Villa Le Ginko Avenue de
Latécoère, F-31700 Cornebarrieu(FR)**

(74) Mandataire: **Barre, Philippe, Cabinet
Barre-Gatti-Laforgue 95 rue des Amidonniers,
F-31069 Toulouse Cédex(FR)**

## Description

La présente invention concerne un distributeur permettant de distribuer des doses de liquide, notamment de boissons. Ce distributeur est destiné à être utilisé en particulier mais non exclusivement comme distributeur de boissons dans un avion.

Les documents US-A 3 802 608, US-A 2 770 394, BE-A 739 211, FR-A 2 564 815 et US-A 4 467 943 décrivent des distributeurs des doses de liquide.

Les distributeurs de boissons fraîches ou chaudes permettant de délivrer une dose de la boisson choisie à l'intérieur d'un gobelet sont actuellement très largement utilisés dans de nombreux endroits publics. Toutefois, aucun de ces distributeurs ne possède les normes de sécurité requises pour pouvoir être embarqué à bord d'un avion. Les consignes de sécurité imposent, en effet, que tout appareil embarqué ne présente aucun risque de voir le liquide qu'il renferme se répandre à l'intérieur de l'avion et ce, en toutes circonstances. Or, actuellement, il n'existe aucun type de distributeur adapté pour remplir ces conditions.

La présente invention a pour objectif de combler cette lacune et se propose de fournir un distributeur de boissons présentant toutes les normes de sécurité requises permettant de l'embarquer à bord d'un avion en vue de distribuer des boissons fraîches ou chaudes.

Un objectif supplémentaire est de permettre de distribuer des boissons chaudes à une température sensiblement constante pendant plusieurs heures, sans nécessiter un réchauffage en vol du liquide.

A cet effet, le distributeur objet de l'invention est du type comprenant :
- une cuve de stockage étanche,
- une pompe dotée d'un corps comportant une chambre de dosage et d'un organe mobile à l'intérieur de ladite chambre de façon à faire varier la capacité de cette dernière,
- des moyens d'actionnement de l'organe mobile aptes à l'entraîner entre deux positions extrêmes, dites haute et basse, correspondant respectivement à des capacités maximum et minimum de la chambre de dosage,
- des moyens de canalisation, dits conduit de puisage, reliant la chambre de dosage et le fond de la cuve,
- des moyens de canalisation, dits conduit de distribution, reliés à la chambre de dosage en vue de la distribution du liquide.

Selon la présente invention, ce distributeur se caractérise en ce qu'il comprend :
- une valve unidirectionnelle, dite de puisage, à seuil de pression Po, interposée sur le conduit de puisage et adaptée pour ouvrir la communication de la cuve vers la chambre sous l'effet de la dépression régnant dans ladite chambre lors du déplacement de l'organe mobile vers sa position haute,
- une valve unidirectionnelle, dite de distribution, à seuil de pression Pi, interposée sur le conduit de distribution et adaptée pour ouvrir ledit conduit sous l'effet de la surpression régnant dans la chambre de dosage lors du déplacement de l'organe mobile vers sa position basse,
- des premiers moyens de communication entre l'intérieur et l'extérieur de la cuve, dits premiers moyens de communication, agencés pour déboucher au-dessus du niveau maximum de liquide,
- des moyens d'obturation des premiers moyens de communication asservis à l'organe mobile, de façon à obturer lesdits premiers moyens de communication dans la position haute dudit organe mobile et assurer la mise à l'air libre de la cuve pour les autres positions dudit organe mobile,
- des seconds moyens de communication entre l'intérieur et l'extérieur de la cuve, dits seconds moyens de communication, agencés pour déboucher au-dessus du niveau maximum de liquide et équipés d'une valve unidirectionnelle, dite de sécurité, à seuil de pression Pc, adaptée pour permettre la mise à l'air libre de la cuve lorsque cette dernière est soumise à une surpression supérieure à un seuil Pc déterminé, tel que :

$$Ph < Pc < Po+Pi \text{ où :}$$

. Po et Pi représentent les seuils de pression d'ouverture des valves de distribution et de puisage et,
. Ph représente la pression hydrostatique du liquide au niveau de la valve de sécurité dans une position couchée de la cuve.

En outre, lors de l'utilisation de ce distributeur dans un avion, la cuve de ce dernier est dimensionnée de façon à offrir une capacité supérieure au nombre maximum n de doses de liquide pouvant être distribuées entre deux remplissages de cette cuve.

Les différents moyens décrits ci-dessus coopèrent pour assurer une sécurité absolue vis-à-vis d'un déversement de liquide hors de la cuve. En effet :
- La mise à l'air libre de la cuve, nécessaire au fonctionnement correct de la pompe est obturée dans la position haute du piston : ainsi, le liquide ne peut se répandre lors d'une chute éventuelle du distributeur.
- Lors de la montée en altitude et donc de la pressurisation de la cabine, la valve de sécurité permet de maintenir une différence de pression constante entre la cuve et la cabine. En outre, l'ouverture de cette valve permettant d'obtenir cet équilibre entraîne uniquement l'évacuation de vapeurs, et non de liquide, étant donné que les moyens de communication débouchent dans la cuve au-dessus du niveau maximum de liquide.
- De plus, le seuil de pression Pc d'ouverture de cette valve de sécurité étant inférieur à la somme Po + Pi des seuils de pression des valves de puisage et de distribution, l'ouverture de cette valve de sécurité intervient obligatoirement avant celle éventuelle des valves de puisage et de distribution. Aucun écoulement accidentel de liquide dû à l'ouverture de ces deux valves n'est donc à redouter.

Il est à noter qu'il en est de même lors de la mise en température du liquide lorsque le distributeur est utilisé pour distribuer des boissons chaudes.

Par ailleurs, le seuil de pression Pc d'ouverture de la valve de sécurité est prévu supérieur à la pression hydrostatique du liquide dans une position couchée de la cuve. Ainsi, même si le distributeur est renversé accidentellement, cette valve reste fermée. Là encore, cette disposition permet d'éviter tout écoulement de liquide hors de la cuve.

Les premiers moyens de communication entre l'intérieur et l'extérieur de la cuve permettant la mise à l'air libre de celle-ci lors de l'actionnement du piston, comprennent préférentiellement au moins deux passages ménagés sur le corps de pompe et agencés pour communiquer respectivement avec l'intérieur et l'extérieur de cette cuve. L'organe mobile est, quant à lui, constitué d'un piston faisant office de moyens d'obturation et présentant à cet effet une forme adaptée pour obturer la communication dans sa position haute et assurer la mise à l'air libre de la cuve pour les autres positions.

Un mode de réalisation préférentiel consiste alors à utiliser une pompe portée par une paroi, dite supérieure, de la cuve et agencée de façon à faire partiellement saillie à l'extérieur de ladite cuve, ladite pompe présentant les caractéristiques suivantes:
- le corps de pompe comporte deux compartiments, dits haut et bas, superposés, de diamètres intérieurs différents, le compartiment, dit bas, d'un diamètre supérieur, constituant la chambre de dosage et étant disposé à l'intérieur de la cuve et le compartiment haut comportant au moins un tronçon extérieur à la cuve,
- les passages sont constitués de simples orifices ménagés dans chaque compartiment et débouchant respectivement à l'intérieur et à l'extérieur de la cuve,
- le piston comporte deux têtes, dites haute et basse, de diamètres conjugués de ceux des compartiments, la tête de piston, dite basse, apte à coulisser dans la chambre de dosage étant dotée de moyens d'étanchéité aptes à obturer la communication entre les orifices précités, dans la position haute du piston.

Par ailleurs, le distributeur comprend avantageusement, et de façon classique, une niche à gobelets. Selon une caractéristique de l'invention, les moyens de communication entre l'intérieur et l'extérieur de la cuve sont alors agencés de façon à déboucher dans cette niche à gobelets. Les condensats peuvent ainsi être acheminés vers une bouteille de récupération raccordée à cette niche, de façon à éviter une diffusion même mineure de vapeur à l'intérieur de la cabine.

Selon une autre caractéristique supplémentaire de l'invention, les moyens d'actionnement du piston comprennent :
- des moyens d'alimentation pneumatique adaptés pour engendrer un déplacement du piston vers sa position basse,
- des moyens de rappel élastiques adaptés pour engendrer le retour du piston vers sa position haute,
- des moyens d'interruption de l'alimentation pneumatique adaptés pour couper cette alimentation dans la position basse du piston,
- des moyens de répartition du fluide pneumatique, asservis aux moyens d'interruption et adaptés pour permettre un écoulement du fluide vers le piston lorsque les moyens d'interruption sont ouverts, et une évacuation de ce fluide lorsque ces moyens d'interruption sont fermés.

Ces moyens d'actionnement présentent l'avantage de permettre un fonctionnement autonome du distributeur en utilisant par exemple des moyens d'alimentation constitués d'une bouteille d'air comprimé intégrée à l'intérieur de ce distributeur. Comme, par ailleurs, et tel qu'explicité plus loin, la mise en température du liquide nécessaire lors de la distribution de boissons chaudes, est réalisée avant l'embarquement du distributeur pour des raisons de sécurité, ce distributeur est donc totalement autonome et ne nécessite d'être relié à aucune source d'alimentation extérieure.

D'autres caractéristiques, buts et avantages se dégageront de la description qui suit, en référence aux dessins annexés qui en présentent à titre d'exemple non limitatif, un mode de réalisation préférentiel. Sur ces dessins qui font partie intégrante de la présente description :

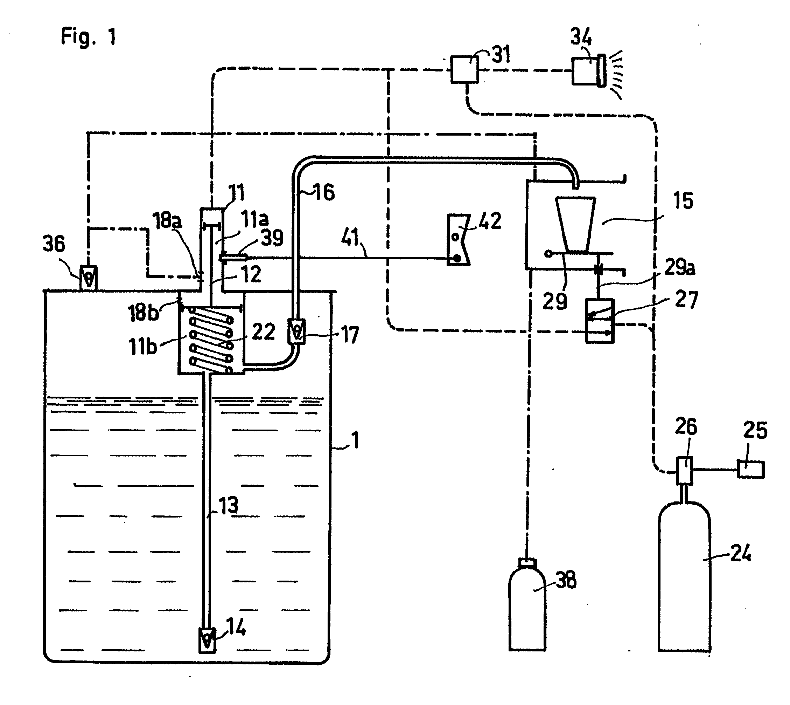

- la figure 1 est un schéma de principe illustrant le fonctionnement d'un distributeur conforme à l'invention,

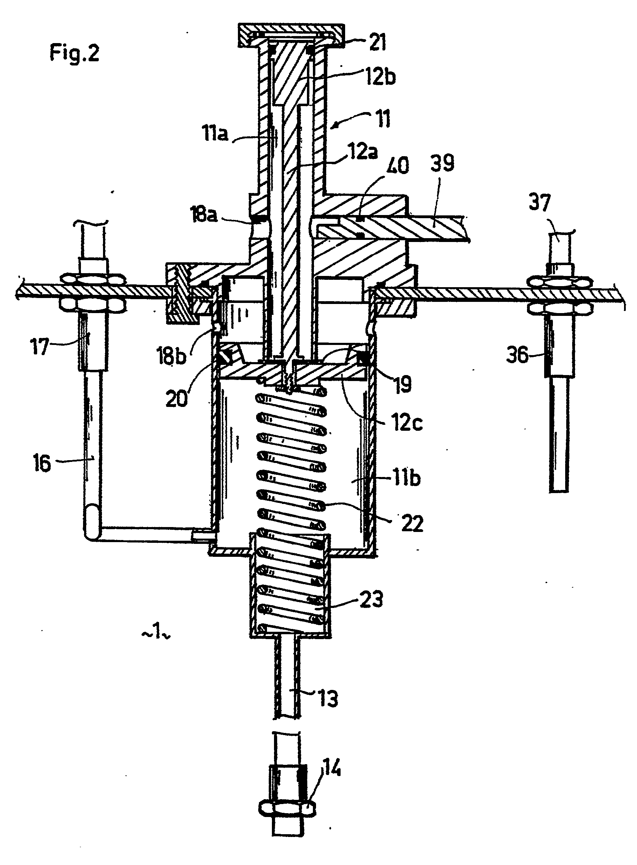

- la figure 2 est une coupe longitudinale de la pompe équipant ce distributeur,

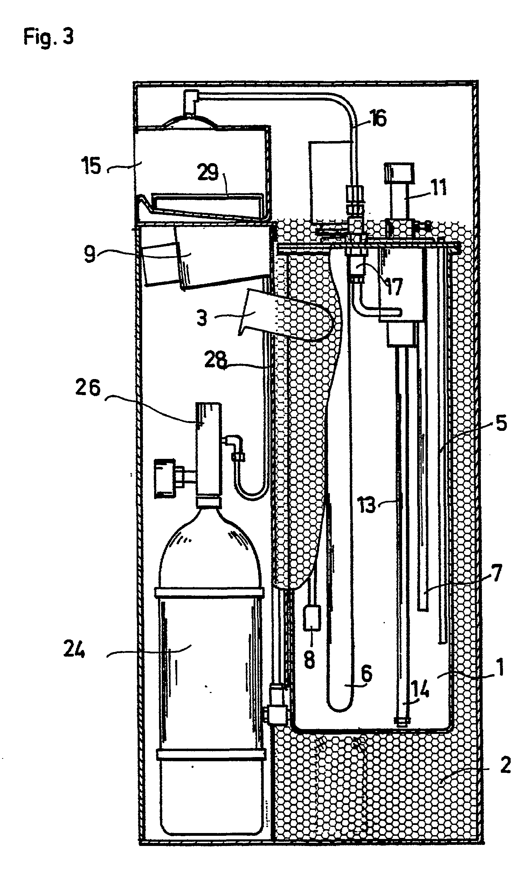

- la figure 3 est une vue longitudinale intérieure du distributeur,

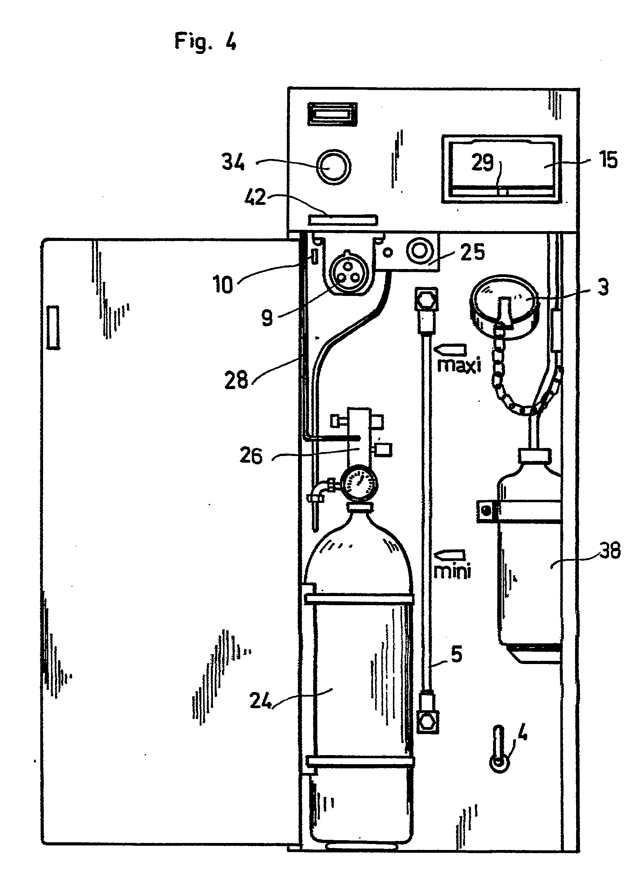

- la figure 4 en est une vue de face, la porte d'accès étant en position ouverte,

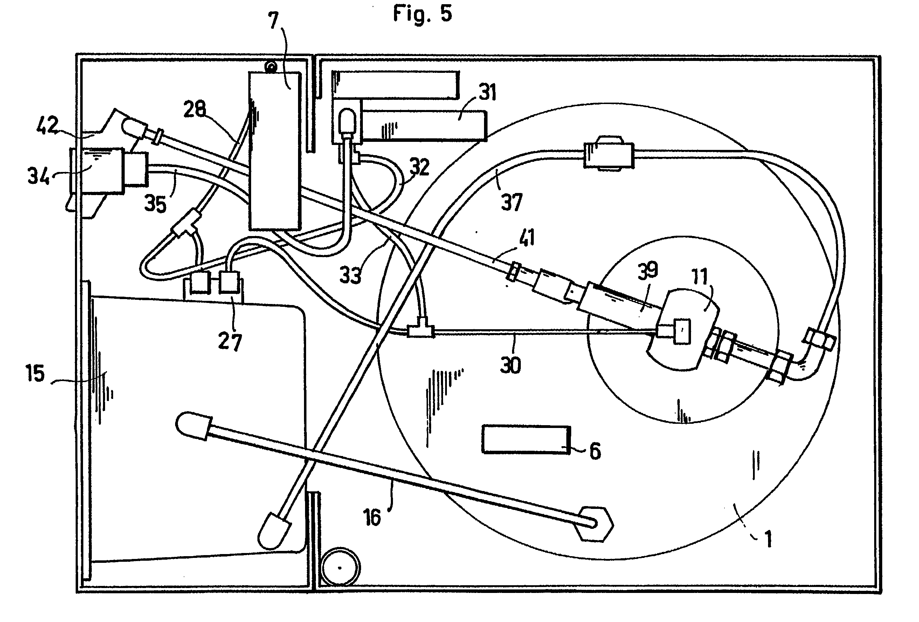

- la figure 5 en est une vue dessus, la paroi supérieure étant retirée,
- la figure 6 est un schéma de principe du circuit d'alimentation électrique de ce distributeur,
- la figure 7 est un schéma de principe du circuit d'alimentation pneumatique de ce distributeur.

Le distributeur, conforme à l'invention, est destiné à être disposé sur un chariot, en vue de permettre la distribution de boissons chaudes à l'intérieur d'un avion.

Ce distributeur comprend une cuve de stockage 1 étanche, isolée extérieurement au moyen d'un matériau 2 tel que de la mousse "Eccofoam"®. Cette cuve 1 est dotée d'un bouchon de remplissage 3 en partie haute et d'un robinet de vidange 4 en partie basse. De plus, un tube de niveau 5 gradué et visible de l'extérieur indique le niveau de liquide à l'intérieur de cette cuve. Ce tube de niveau est, en outre, doté de graduations indiquant les niveaux minimum et maximum à respecter pour des raisons explicitées ci-après.

Dans la cuve 1 est disposée une résistance chauffante 6 agencée de façon à chauffer le liquide dans la partie inférieure de cette cuve. L'alimentation électrique de ces résistances 6 est asservie à un thermostat 7, agencé de façon à relever la température du liquide sensiblement à mi-hauteur de la cuve et pour couper l'alimentation pour une température sensiblement égale à 80° C, inférieure à la température d'ébullition de l'eau dans les conditions de vol à haute altitude.

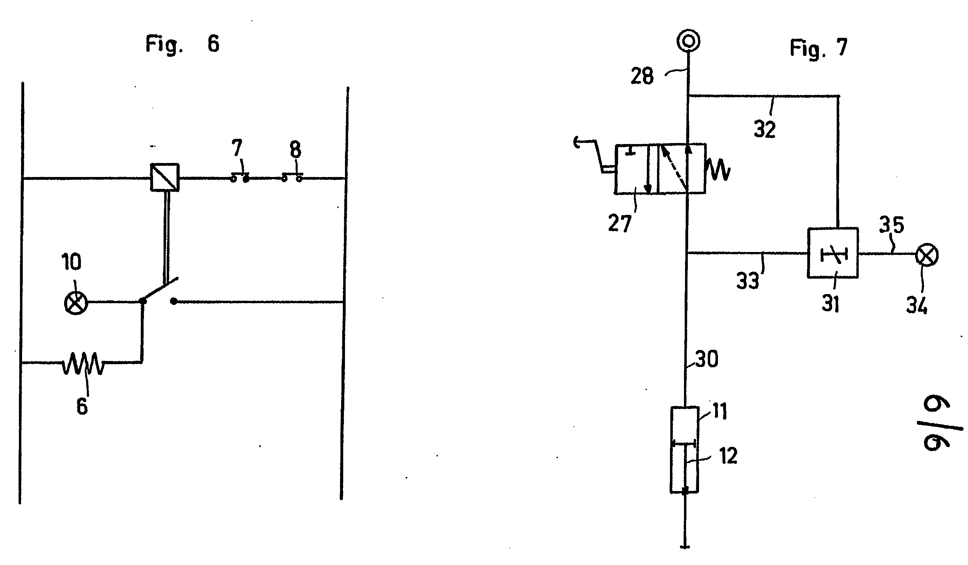

En outre, un niveau électrique 8 est connecté sur le circuit d'alimentation électrique et adapté, tel qu'indiqué à la figure 6, pour ouvrir ce circuit et donc interdire le chauffage si le niveau de liquide est inférieur au niveau minimum précité.

La fonction de ce niveau 8 est d'éviter la mise sous tension des résistances lorsqu'elles ne sont pas immergées, ce qui provoquerait des risques de dégradation de celles-ci.

Ce circuit d'alimentation électrique est connecté aux bornes d'une prise de courant 9 accessible sur la paroi frontale du distributeur. La mise en température du liquide peut ainsi être effectuée avant l'embarquement du distributeur dans l'avion, pour des raisons de sécurité évidentes. Un voyant de chauffe 10 permet, en dernier lieu, de signaler la fin de la chauffe.

La distribution des doses de boisson est assurée par une pompe 11 dotée d'une chambre de dosage 11b et fixée sur la paroi supérieure du distributeur. A l'intérieur de cette pompe coulisse un piston 12 adapté pour se déplacer entre une position haute correspondant à la capacité maximum de la chambre de dosage 11b et une position basse correspondant à la capacité minimum de cette chambre.

Lors de la remontée du piston 12, le liquide est aspiré dans le fond de la cuve 1 par l'intermédiaire d'une canalisation 13 reliant le fond de cuve et la chambre 11b. Cette canalisation est, en outre, dotée au niveau de son extrémité inférieure d'une valve unidirectionnelle 14 de puisage, à seuil de pression Po, adaptée pour ouvrir la communication de la cuve 1 vers la chambre 11b, sous l'effet de la dépression régnant dans cette chambre lors de la remontée du piston. Ce seuil de pression est, en l'exemple, déterminé pour permettre l'ouverture de la valve 14 pour une dépression de 30 millibars.

Il est à noter que l'eau puisée dans le fond de la cuve 1, lors des premières distributions, est à une température de l'ordre de 60° C, inférieure à la température du liquide détectée par le thermostat 7 qui est, elle, sensiblement égale à 80° C. Ce phénomène est dû au fait que le liquide chauffé par les résistances chauffantes 6, disposées dans le fond de la cuve 1, a tendance à monter naturellement dans cette cuve. Le thermostat 7 positionné à mi-cuve interrompt donc la chauffe alors que le liquide en fond de cuve est seulement à une température de l'ordre de 60° C.

Loin de présenter un inconvénient, ce phénomène permet au contraire de distribuer des boissons chaudes à une température sensiblement constante pendant plusieurs heures. En effet, lors des premières distributions, le liquide puisé se réchauffe lors de sa remontée dans la canalisation 13 pour être finalement distribué à une température de l'ordre de 65° C.

En raison des déperditions de chaleur, la température du liquide contenu dans la cuve 1 diminue ensuite dans le temps ; l'échange de chaleur entre le liquide contenu dans cette cuve 1 et le liquide s'écoulant dans la canalisation 13 devient donc moins important et la température du fluide distribué reste sensiblement constante.

Par exemple, au moyen d'une isolation 2 du type mousse "Eccofoam" déterminant une baisse de température de l'ordre de 2° C par heure, la température du liquide distribué restera constante, de l'ordre de 65° C, pendant environ cinq heures.

Lors de la descente du piston 12, le liquide est refoulé vers une niche à gobelets 15 s'ouvrant sur la paroi frontale du distributeur et reliée à la chambre de dosage 11b, par l'intermédiaire d'une canalisation 16. Cette canalisation est, comme précédemment, équipée d'une valve unidirectionnelle de distribution 17, à seuil de pression Pi, adaptée pour ouvrir la communication de la chambre 11b vers la niche à gobelets 15 sous l'effet de la surpression régnant dans cette chambre. Ce seuil de pression est, en l'exemple, déterminé pour permettre une ouverture de la valve pour une surpression de 50 millibars.

La pompe 11 présente, par ailleurs, la particularité d'être divisée en deux compartiments, haut et bas, 11a, 11b superposés et de diamètres différents, le compartiment haut 11a se prolongeant à l'intérieur du compartiment bas 11b ; le compartiment bas 11b, de diamètre supérieur, constitue quant à lui la chambre de dosage. Cette pompe est, en outre, agencée sur la paroi supérieure du distributeur, de façon que la chambre de dosage 11b se trouve à l'intérieur de la cuve 1 tandis que le compartiment haut 11a fait saillie partiellement au-dessus de la cuve 1.

Le piston 12 comporte un corps de piston 12a de diamètre inférieur à ceux des compartiments 11a, 11b. Ce corps relie deux têtes de pistons 12b, 12c de diamètres adaptés pour pouvoir coulisser chacune dans un des compartiments 11a, 11b.

La course du piston 12 est donc déterminée par la course de la tête de piston basse 12c qui vient, en butée haute, en appui contre l'extrémité inférieure du compartiment haut 11a et, en butée basse, reposer sur le fond de la chambre de dosage 11b.

Des moyens de communication 18a, 18b permettent, en outre, d'assurer la mise à l'air libre de la cuve 1 lors d'un actionnement du piston 12. Ces moyens de communication sont constitués d'orifices 18a, 18b ménagés dans chaque compartiment 11a, 11b et débouchant directement soit dans la cuve 1, soit à l'extérieur de cette cuve 1.

Ces orifices sont pratiqués respectivement dans le tronçon du compartiment haut 11a, extérieur à la cuve 1 et dans le tronçon du compartiment bas 11b situé au-dessus de la butée haute de la tête de piston 12c. Cette tête de piston 12c est en outre dotée d'un joint d'étanchéité 19 agencé de façon à se trouver interposé entre cette tête de piston et l'extrémité inférieure du compartiment haut 11a en vue d'obturer la communication entre les orifices 18a, 18b dans la position haute du piston 12.

En dernier lieu, chacune des têtes de piston 12b, 12c est dotée d'un joint d'étanchéité annulaire 20, 21 assurant l'étanchéité entre les compartiments 11a, 11b.

Les moyens d'actionnement du piston comprennent des moyens d'alimentation pneumatique permettant de déplacer ce piston vers sa position basse et des moyens de rappel élastiques permettant le retour du piston vers sa position haute.

Ces moyens de rappel élastiques sont consitués d'un ressort 22 disposé dans un logement cylindrique 23, agencé dans le prolongement inférieur de la chambre de dosage 11b et doté d'un orifice de communication avec la canalisation de puisage 13. Ce ressort 22 se trouve donc comprimé par la tête de piston basse 12c lors de la descente du piston 12 et permet d'entraîner le retour de ce piston vers sa position haute.

Les moyens d'alimentation pneumatique comprennent une bouteille d'air comprimé 24 dotée d'un raccord self-obturateur 25 haute pression permettant son remplissage et d'un détendeur 26 permettant d'abaisser la pression du fluide à cinq bars.

Ce fluide est acheminé au moyen d'une canalisation 28 vers un distributeur pneumatique 27 doté d'une entrée de fluide raccordée à cette canalisation 28, d'une sortie d'alimentation reliée au compartiment 11a de la pompe 11 au moyen d'une canalisation 30, et d'une sortie d'évacuation permettant l'évacuation de l'air contenu dans le compartiment 11a et la canalisation 30 lors de la remontée du piston 12.

Le commutation du distributeur 27 entre ses deux états est réalisée au moyen d'un organe de commande 29a solidarisé à une plaque-support 29 flexible, disposée dans la niche à gobelets 15 et destinée à supporter les gobelets.

La mise en place d'un gobelet entraîne, en effet, une déformation de cette plaque-support 29 et la commutation, par l'intérmédiaire de l'organe de commande 29a du distributeur 27 vers la position où il permet d'alimenter la pompe 11. Le retrait du gobelet entraîne, au contraire, le retour de la plaque-support 29 vers sa position initiale et la commutation du distributeur 27 vers sa position où il permet l'évacuation du fluide et, par conséquent, la remontée du piston 12 sous l'action du ressort 22.

Un temporisateur pneumatique 31 permet en outre de délivrer un signal de fin de distribution. Ce temporisateur 31 est raccordé d'une part, en amont du distributeur 27 au moyen d'une canalisation 32 et, d'autre part, en aval de ce distributeur au moyen d'une canalisation 33. Ce temporisateur 31, étant activé lorsque ses deux bornes sont alimentées, est sollicité uniquement après la mise en place du gobelet dans la niche 15. Après un intervalle de temps approprié, au moins égal au temps mis par le piston 12 pour se déplacer de sa position haute vers sa position basse, ce temporisateur 31 alimente un voyant pneumatique 34 au moyen d'une canalisation 35. Ce signal de fin de distribution permet à l'utilisateur de retirer le gobelet et provoque donc la commutation du distributeur pneumatique 27.

Un autre organe essentiel de ce distributeur de boissons consiste en une valve unidirectionnelle 36, dite de sécurité, à seuil de pression Pc, interposée sur des moyens de communication entre l'intérieur et l'extérieur de la cuve 1 agencés pour déboucher au-dessus du niveau maximum de liquide.

Cette valve de sécurité 36 est adaptée pour permettre la mise à l'air libre de la cuve 1 lorsque cette dernière est soumise à une surpression supérieure au seuil Pc précité et déterminé de façon que :
$Ph < Pc < Po+Pi$ où :
. Po et Pi représentent les seuils de pression d'ouverture des valves de distribution 17 et de puisage 14,
. Ph représente la pression hydrostatique du liquide dans une position couchée de la cuve 1.

Ces impératifs ont conduit au choix d'une valeur de Pc égale à 40 millibars déterminée en fonction du diamètre de la cuve 1 qui, en l'exemple, est de 200 millimètres et des valeurs de Po (50 millibars) et Pi (30 millibars).

Ce choix a pour but de faire jouer un triple rôle à cette valve de sécurité 36 :
- maintien d'une différence de pression constante entre la cuve 1 et la cabine de l'avion,
- déclenchement impératif de cette valve 36 avant l'ouverture des valves de distribution 17 et de puisage 14, de façon à éviter tout écoulement de liquide vers la niche à gobelets 15 lors d'une montée en pression à l'intérieur de la cuve 1,
- maintien de cette valve 36 en position fermée au cas où la cuve 1 se trouverait accidentellement en position couchée.

En outre, cette valve de sécurité 36 ainsi que l'orifice 18a permettant la mise à l'air libre de la cuve 1, sont reliés à la niche à gobelets 15 au moyen d'une canalisation 37. Ainsi, les vapeurs s'échappant de la cuve, lors notamment de la mise en température du liquide, peuvent être récupérées dans une bouteille 38 de récupération des condensats raccordée à cette niche 15.

En dernier lieu, le distributeur comprend un organe de sélection permettant éventuellement de limiter la course du piston 12, en vue de délivrer une dose réduite de liquide. Cet organe de sélection est constitué d'un doigt 39 mobile entre deux positions :
- une position où il débouche à l'intérieur d'un compartiment 11a, 11b et où il sert de butée intermédiaire à une tête 12b, 12c de piston en vue de délivrer une dose de liquide inférieure à la capacité maximum de la chambre de dosage 11b,
- une position où il est escamoté à l'extérieur du compartiment, de façon à permettre un déplacement du piston 12 jusqu'à sa position basse.

En l'exemple, ce doigt de sélection 39 est positionné au niveau du tronçon du compartiment haut 11a, extérieur à la cuve 1. Il peut ainsi être actionné directement au moyen d'une tige 41 reliée, au niveau de la paroi avant du distributeur, à un bouton de manoeuvre 42, actionnable manuellement.

En outre, ce doigt de sélection 39 est doté d'un joint annulaire 40, préservant l'étanchéité de la pompe 11.

Les différents organes constituant ce distributeur de boissons ayant été décrits, son fonctionnement sera mieux compris à l'aide de la description ci-après.

Dans un premier temps, le liquide est mis en température avant l'embarquement du distributeur. Lors de cette opération, une augmentation du volume de liquide ne peut provoquer qu'une ouverture de la valve de sécurité 36 et, par conséquent, un évacuation de vapeur récupérée dans la bouteille 38.

Après embarquement et lors de la pressurisation de la cabine, la valve de sécurité 36 permet de maintenir une différence de pression constante entre la cuve 1 et la cabine. En outre, le piston 12 étant en position haute, aucun déversement de liquide n'est à rédouter même dans le cas où le distributeur serait accidentellement renversé.

La distribution de boissons nécessite ensuite, de sélectionner la dose de liquide désirée, puis de mettre en place le gobelet dans la niche 15 sur la plaque-support 29.

Cette simple action entraîne le changement d'état du distributeur pneumatique 27 et, par conséquent, l'alimentation pneumatique de la pompe 11 et du temporisateur 31.

Le déplacement du piston 12 permet alors d'assurer la mise à l'air libre de la cuve 1. Il est à noter, en outre, qu'une détérioration éventuelle du joint d'étanchéité 21 de la tête de piston haute 12b a pour seul effet de provoquer une fuite de fluide au travers de l'orifice 18a et n'entraîne pas, par conséquent, une augmentation de pression dans la cuve 1.

La fin de distribution signalée par le voyant pneumatique 34 indique que l'on peut retirer le gobelet de la niche 15. Ce retrait entraîne automatiquement un changement d'état du distributeur pneumatique et, par suite, le retour du piston 12 vers sa position haute sous l'action du ressort 23 et le remplissage de la chambre de dosage.

Ce distributeur de boissons est donc entièrement autonome, une fois embarqué dans l'avion. De plus, et surtout, l'association des trois valves unidirectionnelles 14, 17, 36 et des moyens d'obturation permettant, en position haute du piston 12, d'obturer la mise à l'air libre de la cuve 1, permet de se garantir contre tous risques de voir le liquide se répandre accidentellement à l'intérieur de l'avion.

## Revendications

1/ - Distributeur permettant de distribuer des doses de liquides et destiné à être utilisé notamment comme distributeur de boissons, du type comprenant :
- une cuve de stockage (1) étanche,
- une pompe (11) dotée d'un corps comportant une chambre de dosage (11b) et d'un organe (12) mobile à l'intérieur de ladite chambre de façon à faire varier la capacité de cette dernière,
- des moyens d'actionnement (22, 24, 26-35) de l'organe mobile (12) aptes à l'entraîner entre deux positions extrêmes, dites haute et basse, correspondant respectivement à des capacités maximum et minimum de la chambre de dosage (11b),
- des moyens de canalisation (13), dits conduit de puisage, reliant la chambre de dosage (11b) et le fond de la cuve (1),
- des moyens de canalisation (16), dits conduit de distribution, reliés à la chambre de dosage (11b) en vue de la distribution du liquide,
ledit distributeur étant caractérisé en ce qu'il comprend :
- une valve unidirectionnelle (14), dite de puisage, à seuil de pression Po, interposée sur le conduit de puisage (13) et adaptée pour ouvrir la communication de la cuve vers la chambre sous l'effet de la dépression régnant dans ladite chambre lors du déplacement de l'organe mobile (12) vers sa position haute,
- une valve unidirectionnelle (17), dite de distribution, à seuil de pression Pi, interposée sur le conduit de distribution (16) et adaptée pour ouvrir ledit conduit sous l'effet de la surpression régnant dans la chambre de dosage (11b) lors du déplacement de l'organe mobile (12) vers sa position basse,
- des premiers moyens de communication (18a, 18b) entre l'intérieur et l'extérieur de la cuve (1), dits premiers moyens de communication, agencés pour déboucher au-dessus du niveau maximum de liquide,
- des moyens d'obturation (12c) des premiers moyens de communication (18a, 18b) asservis à l'organe mobile (12), de façon à obturer lesdits premiers moyens de communication dans la position haute dudit organe mobile et assurer la mise à l'air libre de la cuve (1) pour les autres positions dudit organe mobile,
- des seconds moyens de communication (36, 37) entre l'intérieur et l'extérieur de la cuve (1), dits seconds moyens de communication, agencés pour déboucher au-dessus du niveau maximum de liquide et équipés d'une valve unidirectionnelle (36), dite de sécurité, à seuil de pression Pc, adaptée pour permettre la mise à l'air libre de la cuve lorsque cette dernière est soumise à une surpression supérieure à un seuil Pc déterminé, tel que :
Ph < Pc < Po+Pi où :
. Po et Pi représentent les seuils de pression d'ouverture des valves de distribution (17) et de puisage (14) et,
. Ph représente la pression hydrostatique du liquide au niveau de la valve de sécurité (36) dans une position couchée de la cuve (1).

2/ - Distributeur selon la revendication 1, destiné à être utilisé comme distributeur de boissons, dans un avion, et adapté pour permettre de distribuer un nombre maximum n de doses de liquide, entre deux escales, dans lequel la cuve (1) présente une capacité supérieure au nombre n de doses précité.

3/ - Distributeur selon l'une des revendications 1 ou 2, dans lequel l'organe mobile (12) de la pompe (11) est constitué d'un piston de section conjuguée de celle de la chambre de dosage (11b), pour pouvoir coulisser à l'intérieur de cette dernière, en vue de refouler une dose de liquide lors de son déplacement vers sa position basse et aspirer une dose de liquide lors de son déplacement vers sa position haute.

4/ - Distributeur selon la revendication 3, caractérisé en ce que les premiers moyens de communication comprennent au moins deux passages (18a, 18b) ménagés sur le corps de pompe et agencés pour communiquer respectivement avec l'intérieur et l'extérieur de la cuve (1), le piston (12) étant de forme adaptée pour faire office de moyens d'obturation et obturer la communication dans sa position haute et assurer la mise à l'air libre de la cuve pour les autres positions.

5/ - Distributeur selon l'une des revendications 3 ou 4, caractérisé en ce que les moyens d'actionnement du piston comprennent :
- des moyens d'alimentation pneumatique (24, 26) adaptés pour engendrer un déplacement du piston (12) vers sa position basse,
- des moyens de rappel (22) élastiques adaptés pour engendrer le retour du piston (12) vers sa position haute,
- des moyens d'interruption (29, 31-35) de l'alimentation pneumatique adaptés pour couper cette alimentation dans la position basse du piston,
- des moyens de répartition (27, 28, 30) du fluide pneumatique, asservis aux moyens d'interruption (29, 31-35) et adaptés pour permettre un écoulement du fluide vers le piston (12) lorsque les moyens d'interruption sont ouverts, et une évacuation de ce fluide lorsque ces moyens d'interruption sont fermés.

6/ - Distributeur selon la revendication 5, comprenant une niche (15) pour gobelets, caractérisé en ce que :
- les moyens de répartition sont constitués d'un distributeur pneumatique (27) possédant une entrée reliée aux moyens d'alimentation (24, 26), une sortie d'alimentation reliée à la pompe (11) et une sortie d'évacuation débouchant à l'air libre,
- les moyens d'interruption comprennent :
. une plaque-support (29) flexible agencée à l'intérieur de la niche à gobelets (15) et adaptée pour supporter le gobelet lors de sa mise en place dans ladite niche,
. un organe de commande (29a) reliant la plaque-support (29) et le distributeur pneumatique (27) et agencé de façon à être actionné lors de la mise en place ou le retrait d'un gobelet, de façon à positionner ledit distributeur :
* dans la position où il permet un écoulement de fluide entre les moyens d'alimentation pneumatique (24, 26) et la pompe (11), après la mise en place d'un gobelet sur la plaque-support (29),
* dans la position où il permet l'évacuation de fluide au travers de la sortie d'évacuation, après le retrait du gobelet,
. des moyens de temporisation (31) adaptés pour délivrer un signal de fin de distribution vers des moyens de signalisation (34), après un intervalle de temps prédéterminé, consécutif à la mise en place du gobelet, au moins égal au temps mis par le piston (12) pour se déplacer de sa position haute vers sa position basse,

7/ - Distributeur selon la revendication 6, caractérisé en ce que les moyens de temporisation sont constitués d'un temporisateur pneumatique (31) adapté pour être activé lors de la mise en place du gobelet dans la niche (15), de façon à alimenter, après l'intervalle de temps prédéterminé, les moyens de signalisation constitués d'un voyant pneumatique (34).

8/ - Distributeur selon l'une des revendications 6 ou 7, caractérisé en ce que les moyens de communication entre l'intérieur et l'extérieur de la cuve (1) sont agencés de façon à déboucher au niveau de la niche à gobelets (15), ledit distributeur comprenant une bouteille (38) de récupération des condensats raccordée à ladite niche.

9/ - Distributeur selon l'une des revendications 2 à 8, dans lequel la pompe (11) est portée par une paroi, dite supérieure, de la cuve (1) et agencée de façon à faire partiellement saillie à l'extérieur de ladite cuve, ledit distributeur étant caractérisé en ce que :
- le corps de pompe comporte deux compartiments (11a, 11b), dits haut et bas, superposés et de diamètres intérieurs différents, le compartiment, dit bas, d'un diamètre supérieur (11b), constituant la chambre de dosage, et étant disposé à l'intérieur de la cuve (1) et le compartiment haut (11a) comportant au moins un tronçon extérieur à la cuve (1),
- les passages (18a, 18b) sont constitués de simples orifices ménagés dans chaque compartiment (11a, 11b) et débouchant respectivement à l'intérieur et à l'extérieur de la cuve (1),
- le piston (12) comporte deux têtes (12b, 12c), dites haute et basse, de diamètres conjugués de ceux des compartiments (11a, 11b), la tête de piston (12c), dite basse, apte à coulisser dans la chambre de dosage (11b), étant dotée de moyens d'étanchéité (29) aptes à obturer la communication entre les orifices (18a, 18b) précités, dans la position haute du piston (12).

10/ - Distributeur selon la revendication 9, caractérisé en ce que :
- le compartiment haut (11a) se prolonge à l'intérieur de la chambre de dosage (11b), de façon à servir de butée à la tête de piston basse (12c), dans la position haute du piston (12),
- chaque orifice de passage (18a, 18b) ménagé dans la chambre de dosage (11b) est pratiqué en regard du tronçon du compartiment haut (11a), débouchant dans ladite chambre (11b),
- les moyens d'étanchéité sont constitués par un joint d'étanchéité (19) solidaire de la tête de piston basse (12c) et disposé de façon à se trouver interposé entre ladite tête de piston et l'extrémité du compartiment haut (11a), dans la position haute du piston (12).

11/ - Distributeur selon l'une des revendications 9 ou 10, caractérisé en ce que les deux têtes (12b, 12c) de piston sont reliées au moyen d'un corps (12a) de diamètre inférieur à celui des compartiments (11a, 11b).

12/ - Distributeur selon l'une des revendications 9 à 11, caractérisé en ce que la tête de piston haute (12b) est doté de moyens d'étanchéité (21) adaptés pour éviter des infiltrations de fluide à l'intérieur du corps de pompe.

13/ - Distributeur selon la revendication 11, caractérisé en ce qu'il comprend un organe de sélection (39) constitué d'un doigt mobile entre deux positions :
- une position où il débouche à l'intérieur d'un compartiment (11a, 11b) et où il sert de butée intermédiaire à une tête (12b, 12c) de piston en vue de délivrer une dose de liquide inférieure à la capacité maximum de la chambre de dosage (11b),
- une position où il est escamoté à l'extérieur du compartiment, de façon à permettre un déplacement du piston (12) jusqu'à sa position basse.

14/ - Distributeur selon l'une des revendications précédentes pour la distribution d'un liquide chaud, ledit distributeur comprenant des moyens d'isolation (2) de la cuve de stockage (1), des moyens de chauffage (6) du liquide et un thermostat (7) adapté pour arrêter les moyens de chauffage (6) pour une température prédéterminée du liquide.

15/ - Distributeur selon la revendication 14, caractérisé en ce que les moyens de chauffage comprennent des résistances électriques (6) disposées vers le fond de la cuve, le thermostat (7) étant disposé sensiblement à mi-hauteur de ladite cuve.

16/ - Distributeur selon la revendication 15, caractérisé en ce qu'il comprend un niveau électrique (8) adapté pour couper l'alimentation des résistances électriques (6) lorsque le niveau de liquide à l'intérieur de la cuve est inférieur à un niveau minimum prédéterminé.

**Claims**

1. Dispenser enabling the distribution of doses of liquids and intended to be used especially as a distributor for beverages, of the type comprising:
   – a sealed storage vessel (1),
   – a pump (11) endowed with a body comprising a dosing chamber (11b) and a mobile device (12) within that chamber, with a view to varying the capacity of the latter,
   – means (22, 24, 26–35) for actuating mobile device (12), capable of driving it between two end positions, the so-called upper and the so-called lower position, corresponding respectively to maximum and minimum capacities of dosing chamber (11b),
   – channelling means (13) referred to as the draw-up line, connecting dosing chamber (11b) and the bottom of vessel (1),
   – channelling means (16) referred to as the distribution line, connected to dosing chamber (11b) with a view to distributing the liquid,
   said dispenser being characterised in that it comprises:
   – a one-way valve (14), the so-called draw-up valve, at pressure threshold Po, interposed in draw-up line (13) and so designed as to open the line from the vessel towards the chamber subject to the negative pressure obtaining within said chamber during displacement of mobile device (12) towards its upper position,
   – a one-way valve (17), the so-called distributor valve, at pressure threshold Pi, interposed in distribution line (16) and so designed as to open said line subject to the excess pressure obtaining in dosing chamber (11b) during displacement of mobile device (12) towards its lower position,
   – first communication means (18a, 18b) between the inside and the outside of vessel (1), the so-called first means of communications, so arranged as to open out above the maximum level of the liquid,
   – blocking means (12c) of first means of communications (18a, 18b) connected with mobile device (12), so as to block said first means of communications in the upper position of said mobile device and ensure connection of vessel (1) with the open air in the other positions of said mobile device,
   – second means of communications (36, 37) between the inside and the outside of vessel (1), the so-called second means of communications, so arranged as to open out above the maximum level of the liquid and provided with a one-way valve (36), the so-called safety valve, at pressure threshold Pc, said valve being so designed as to connect the vessel with the open air when said vessel is subjected to an excess pressure higher than a given threshold Pc, so that
   $Ph < Pc < Po+Pi$ where:
   . Po and Pi represent the thresholds of the pressure for opening the distribution valve (17) and the one-way valve (14), and
   . Ph represents the hydrostatic pressure of the liquid at the level of safety valve (36) in a non-upright position of vessel (1).

2. Dispenser according to claim 1, intended for use as a beverage dispenser in an aeroplane and so designed as to enable distribution of a maximum number n of liquid doses between two landing places, in which vessel (1) has a capacity higher than said number n of doses.

3. Dispenser according to one of claims 1 or 2, in which mobile device (12) of pump (11) is constituted by a piston the section of which matches that of dosing chamber (11b) so as to be able to slide within the latter, with a view to delivering a dose of liquid during its displacement towards the lower position and aspirating a dose of liquid during its displacement towards the upper position.

4. Dispenser according to claim 3, characterised in that the first means of communication comprise at least two passages (18a, 18b) provided within the body of the pump and so arranged as to communicate with the inside and the outside of vessel (1), respectively, piston (12) being shaped in such a way as to serve as a blocking means and block the communication in its high position, while ensuring that in its other positions the vessel is connected with the open air.

5. Dispenser according to one of claims 3 or 4, characterised in that the piston actuating means comprise:
   – pneumatic supply means (24, 26) so designed as to bring about displacement of piston (12) towards its lower position,
   – flexible return means (22) so designed as to cause piston (12) to return towards its upper position,
   – means (29, 31–35) for interrupting the pneumatic supply, so designed as to discontinue said supply in the lower position of the piston,
   – means (27, 28, 30) for pneumatic fluid distribution, governed by the interrupting means (29, 31–35) and so designed as to enable the fluid to flow towards piston (12) when the interrupting means are open, as well as draining of said fluid when said interrupting means are closed.

6. Dispenser according to claim 5, comprising a niche (15) for cups, characterised in that
   – the distributing means are constituted by a pneumatic distributor (27) with an inlet connected with supply means (24, 26) a supply outlet connected with pump (11) and a drainage outlet leading into the open air,
   – the interrupting means comprise:
   . a flexible support plate (29) arranged within cup niche (15) and so designed as to support the cup while it is placed within said niche,
   . a control device (29a) connecting support plate (29) and pneumatic distributor (27) and so designed as to be actuated when a cup is placed in position or withdrawn, so that said distributor is located:
   * in the position in which it permits fluid to flow between the pneumatic supply means (24, 26) and pump (11), once a cup has been placed on support plate (29),

* in the position in which it permits fluid drainage through the drainage outlet, after the cup has been withdrawn,

. timing means (31) so designed as to convey a signal indicating the end of distribution to signalling means (34), after a given period of time following the placing of the cup, said period of time being at least equal to the time required by piston (12) to move from its upper position to its lower position.

7. Dispenser according to claim 6, characterised in that the timing means are constituted by a pneumatic timer (31) so designed as to be actuated when the cup is placed in niche (15), so as to convey, after the predetermined period of time, a signal to the signalling means constituted by a pneumatic signalling device (34).

8. Dispenser according to one of claims 6 or 7, characterised in that the communications means between the inside and outside of vessel (1) are so designed as to open out at the level of cup niche (15), whereby said dispenser comprises a condensate recovery flask (38) connected with said niche.

9. Dispenser according to one of claims 2 to 8, in which pump (11) is supported by a wall, the so-called upper wall, of vessel (1), and so designed as to project partially outside said vessel, said dispenser being characterised in that

— the body of the pump comprises two compartments (11a, 11b), the so-called upper compartment and the so-called lower compartment, one above the other and of different internal diameters, the so-called lower compartment (11b), the diameter of which is larger, constituting the dosing chamber and being arranged within vessel (1) and the upper compartment (11a) comprising at least one section external to vessel (1),

— passages (18a, 18b) are constituted by simple orifices provided in each compartment (11a, 11b) and leading, respectively, to the inside and to the outside of vessel (1),

— piston (12) has two heads (12b, 12c), the so-called upper head and the so-called lower head, with diameters matching those of compartments (11a, 11b), the so-called lower piston head (12c) capable of sliding in dosing chamber (11b) being endowed with sealing means (29) so designed as to block the communication between the above openings (18a, 18b) when piston (12) is in its upper position.

10. Dispenser according to claim 9, characterised in that

— the upper compartment (11a) extends inside dosing chamber (11b) so as to serve as a stop for the lower piston head (12c), in the upper position of piston (12)

— each passage aperture (18a, 18b) provided in dosing chamber (11b) is provided opposite the section of upper compartment (11a), opening out into said chamber (11b),

— the sealing means are constituted by a seal (19) firmly connected with lower piston head (12c) and so arranged as to be interposed between said piston head and the end of upper compartment (11a),

when piston (12) is in its upper position.

11. Dispenser according to one of claims 9 or 10, characterised in that the two piston heads (12b, 12c) are connected by means of a body (12a), the diameter of which is smaller than that of compartments (11a, 11b).

12. Dispenser according to one of claims 9 to 11, characterised in that upper piston head (12b) is endowed with sealing means (21) so designed as to prevent fluid infiltrations into the body of the pump.

13. Dispenser according to claim 11, characterised in that it comprises a selector device (39), constituted by a finger capable of moving between two positions:

— a position, in which it projects inside a compartment (11a, 11b) and serves as an intermediate stop for a piston head (12b, 12c) with a view to delivering a dose of liquid smaller than the maximum capacity of dosing chamber (11b),

— a position in which it is retracted towards the outside of the compartment, so as to enable displacement of piston (12) to its lower position.

14. Dispenser according to one of the preceding claims for distributing a hot liquid, said dispenser comprising insulating means (2) for storage vessel (1), means for heating (6) the liquid and a thermostat (7) so designed as to switch off heating means (6) at a predetermined temperature of the liquid.

15. Dispenser according to claim 14, characterised in that the heating means comprise electric resistors (6) arranged near the bottom of the vessel, thermostat (7) being arranged substantially halfway up said vessel.

16. Dispenser according to claim 15, characterised in that it comprises an electric level control (8) capable of cutting the supply of electric resistor (6) if the liquid level inside the vessel is lower than a predetermined minimum level.

**Patentanprüche**

1. Spender für die dosierte Ausgabe von Flüssigkeiten und insbesondere für den Gebrauch als Getränkespender der Art, die die folgenden Teile umfasst:

- einen dichten Speicherbehälter (1),

- eine Pumpe (11) mit einem eine Dosierkammer (11b) umfassenden Körper und mit einer beweglichen Vorrichtung (12) im Innern der besagten Kammer, die so beschaffen ist, dass sie den Rauminhalt der besagten Kammer ändert,

- Mittel zur Betätigung (22, 24, 26–35) der beweglichen Vorrichtung (12), die so beschaffen sind, dass sie diese zwischen zwei Endlagen verstellen, und zwar einer oberen und einer unteren Endlage, die dem maximalen bzw. dem minimalen Rauminhalt der Dosierkammer (11b) entsprechen,

- Leitmittel (13) die sogenannte Aufziehleitung, die Dosierkammer (11b) mit dem Boden von Behälter (1) verbindet,

- Leitmittel (16), die sogenannte Ausgabeleitung, die mit Dosierkammer (11b) zwecks Ausgabe der Flüssigkeit in Verbindung steht,

wobei der besagte Spender dadurch gekennzeichnet ist, dass er folgende Teile umfasst:

- ein Einwegventil (14), das sogenannte Aufzugsventil mit dem Druckschwellwert Po, das in Aufzugsleitung (13) zwischengeschaltet und so beschaffen ist, dass es unter Einwirkung des in der besagten Kammer während der Verstellung der beweglichen Vorrichtung (12) in die obere Lage die Verbindung von dem Behälter zu der Kammer herstellt,

- ein Einwegventil (17), das sogenannte Ausgabeventil mit dem Druckschwellwert Pi, das in Ausgabeleitung (16) zwischengeschaltet und so beschaffen ist, dass es die besagte Leitung unter Einwirkung des in Dosierkammer (11b) während der Verstellung der beweglichen Vorrichtung (12) in die untere Lage bestehenden Überdrucks öffnet,

- erste Kommunikationsmittel (18a, 18b) zwischen dem Innenraum und dem Raum ausserhalb des Behälters (1), die sogenannten ersten Kommunikationsmittel, die so beschaffen sind, dass sie oberhalb des Flüssigkeitshöchststandes münden,

- Verschlussmittel (12c) der ersten Kommunikationsmittel (18a, 18b), die mit der beweglichen Vorrichtung (12) in Verbindung stehen, so dass sie die besagten ersten Kommunikationsmittel in der oberen Lage der besagten beweglichen Vorrichtung verschliessen und in den anderen Lagen der besagten beweglichen Vorrichtung die Verbindung zwischen Behälter (1) und der freien Luft gewährleisten,

- zweite Kommunikationsmittel (36, 37) zwischen dem Innenraum und dem Raum ausserhalb des Behälters (1), die sogenannten zweiten Kommunikationsmittel, die so beschaffen sind, dass sie oberhalb des Flüssigkeitshöchststandes münden, und die mit einem Einwegventil (36), dem sogenannten Sicherheitsventil mit dem Druckschwellwert Pc, ausgestattet sind, wobei das besagte Sicherheitsventil so beschaffen ist, dass es die Verbindung zwischen dem Behälter und der freien Luft herstellt, wenn auf den Behälter ein Überdruck einwirkt, der höher ist als ein festgesetzter Schwellwert Pc, so dass:

$$Ph < Pc < Po+Pi$$

wobei :

Po und Pi die Schwellwerte des Drucks zum Öffnen des Ausgabeventils (17) und des Aufzugsventils (14) sind und

Ph der hydrostatische Druck der Flüssigkeit im Bereich des Sicherheitsventils (36) in einer nichtaufrechten Lage des Behälters (1) ist.

2. Spender nach Anspruch 1 zum Gebrauch als Getränkespender in einem Flugzeug und so beschaffen, dass er zwischen zwei Zwischenlandungen eine Höchstzahl n von Flüssigkeitsdosen ausgeben kann, wobei Behälter (1) einen Rauminhalt aufweist, der grösser ist als der der vorstehenden Anzahl n Dosen.

3. Spender nach einem der Ansprüche 1 oder 2, bei dem die bewegliche Vorrichtung (12) der Pumpe (11) in einem Kolben besteht, dessen Querschnitt dem der Dosierkammer (11b) entspricht, so dass er innerhalb der besagten Dosierkammer gleiten kann, um während seiner Verstellung in die untere Lage eine Flüssigkeitsdosis abzugeben und während seiner Verstellung in die obere Lage eine Flüssigkeitsdosis anzusaugen.

4. Spender nach Anspruch 3, dadurch gekennzeichnet, dass die ersten Kommunikationsmittel mindenstens zwei Öffnungen (18a, 18b) in dem Körper umfassen, die so beschaffen sind, dass sie mit dem Innenenraum bzw. dem Raum ausserhalb des Behälters (1) in Verbindung stehen, wobei die Form des Kolbens (12) so beschaffen ist, dass der Kolben als Verschlussmittel dient und in seiner oberen Lage die Verbindung unterbricht, während er in den anderen Lagen die Verbindung zwischen dem Behälter und der freien Luft gewährleistet.

5. Spender nach einem der Ansprüche 3 oder 4, dadurch gekennzeichnet, dass die Kolbenbetätigungsmittel die folgenden Teile umfassen:

- Mittel für pneumatische Versorgung (24, 26), die so beschaffen sind, dass sie Verstellung des Kolbens (12) in dessen untere Lage bewirken,

- elastische Rückstellmittel (22), die so beschaffen sind, dass sie die Rückstellung des Kolbens (12) in die obere Lage bewirken,

- Mittel zur Unterbrechung (29, 31–35) der pneumatischen Versorgung, die so beschaffen sind, dass sie diese Versorgung in der unteren Lage des Kolbens unterbrechen,

- Mittel zu pneumatischer Verteilung (27, 28, 30) der Flüssigkeit, die nach Massgabe der Unterbrechungsmittel (29, 31–35) arbeiten und so beschaffen sind, dass die Flüssigkeit zu Kolben (12) fliessen kann, wenn die Unterbrechungsmittel offen sind, und dass die besagte Flüssigkeit ablaufen kann, wenn diese Unterbrechungsmittel geschlossen sind.

6. Spender nach Anspruch 5, umfassend eine Nische (15) für Becher und dadurch gekennzeichnet,

- dass die Verteilungsmittel in einer pneumatischen Ausgabevorrichtung (27) mit einem mit den Versorgungsmitteln (24, 26) in Verbindung stehenden Eingang, einem mit Pumpe (11) in Verbindung stehenden Versorgungsausgang und einem in die freie Luft führenden Ablaufausgang bestehen,

- dass die Unterbrechungsmittel folgende Teile umfassen:

- eine flexible Trageplatte (29) innerhalb der Bechernische (15), wobei die besagte Platte so beschaffen ist, dass sie den Becher während dessen Anordnung in der besagten Nische abstützt,

- eine Steuervorrichtung (29a), die die Trageplatte (29) mit der pneumatischen Ausgabevorrichtung (27) verbindet und so beschaffen ist, dass sie während der Einführung bzw. Entnahme eines Bechers so betätigt wird, dass die besagte Ausgabevorrichtung:

- in die Lage gebracht wird, in der sie Fliessen der Flüssigkeit zwischen den Mitteln zu pneumatischer Versorgung (24, 26) und Pumpe (11) gestattet, wenn ein Becher auf Trageplatte (29) angeordnet wurde,

- in die Lage gebracht wird, in der sie nach Entnahme des Bechers Ablauf der Flüssigkeit durch den Ablaufausgang hindurch gestattet,

- Zeitsteuermittel (31), die so beschaffen sind, dass sie nach einer festgesetzten Zeitspanne anschliessend an der Einführung des Bechers Signalisiermitteln (34) ein Ausgabeabschlusssignal liefern, wobei die besagte Zeitspanne der durch

EP 0 281 163 B1

Kolben (12) für die Verstellung aus der oberen in die untere Lage benötigten Zeit mindestens gleich ist.

7. Spender nach Anspruch 6, dadurch gekennzeichnet, dass die Zeitsteuermittel in einem pneumatischen Zeitschaltwerk (31) bestehen, das so beschaffen ist, dass es bei Einführung des Bechers in Nische (15) betätigt wird, um nach der festgesetzten Zeitpanne den in einer pneumatischen Signalvorrichtung (34) bestehenden Signalisiermitteln ein Signal zuzuführen.

8. Spender nach einem der Ansprüche 6 oder 7, dadurch gekennzeichnet, dass die Kommunikationsmittel zwischen dem Innenraum und dem Raum ausserhalb des Behälters (1) so beschaffen sind, dass sie in Höhe der Bechernische (15) münden, wobei der besagte Spender eine mit der besagten Nische in Verbindung stehende Kondensatrückgewinnungsflasche (38) umfasst.

9. Spender nach einem der Ansprüche 2 bis 8, bei dem Pumpe (11) auf einer Wand, der sogenannten oberen Wand, des Behälters (1) aufgebaut und so beschaffen ist, dass sie teilweise ausserhalb des besagten Behälters vorsteht, wobei der besagte Spender dadurch gekennzeichnet ist,

- dass der Körper der Pumpe zwei Abteile (11a, 11b), das sogenannte obere und das sogenannte untere Abteil, umfasst, die übereinander angeordnet sind und unterschiedliche Innendurchmesser aufweisen, wobei das sogenannte untere Abteil mit grösserem Durchmesser (11b) die Dosierkammer bildet und innerhalb des Behälters (1) angeordnet ist, und das obere Abteil (11a) mindestens einen ausserhalb des Behälters (1) befindlichen Abschnitt umfasst,

- dass die Öffnungen (18a, 18b) in einfachen in jedem Abteil (11a, 11b) vorgesehenen Öffnungen bestehen und innerhalb bzw. ausserhalb des Behälters (1) münden,

- dass Kolben (12) zwei Köpfe (12b, 12c), den sogenannten oberen und den sogenannten unteren Kopf, umfasst, deren Durchmesser mit denen der Abteile (11a, 11b) übereinstimmen, wobei der sogenannte untere Kolbenkopf (12c) der so beschaffen ist, dass er in Dosierkammer (11b) gleitet, mit Abdichtmitteln (29) versehen ist, die so beschaffen sind, dass sie die Verbindung zwischen den besagten Öffnungen (18a, 18b) in der oberen Lage des Kolbens (12) unterbrechen.

10. Spender nach Anspruch 9, dadurch gekennzeichnet,

- dass sich das obere Abteil (11a) ins Innere des Dosierabteils (11b) ersteckt, so dass es in der oberen Lage des Kolbens (12) als Anschlag für den unteren Kolbenkopf (12c) wirkt,

- dass jede in dem Dosierabteil (11b) vorgesehene Durchgangsöffnung (18a, 18b) gegenüber dem sich in das besagte Abteil (11) erstreckenden Abschnitt des oberen Abteils (11a) vorgesehen ist,

- dass die Abdichtmittel in einem mit dem unteren Kolbenkopf (12c) fest verbundenen Dichtring (19) bestehen, wobei der besagte Ring in der oberen Lage des Kolbens (12) zwischen dem besagten Kolbenkopf und dem Ende des oberen Abteils (11a) angeordnet ist.

11. Spender nach einem der Ansprüche 9 oder 10, dadurch gekennzeichnet, dass die beiden Kolbenköpfe (12b, 12c) mit Hilfe eines Körpers (12a) verbunden sind, dessen Durchmesser geringer ist als der der Abteile (11a, 11b).

12. Spender nach einem der Ansprüche 9 bis 11, dadurch gekennzeichnet, dass der obere Kolbenkopf (12b) mit Abdichtmitteln (21) versehen ist, die so beschaffen sind, dass sie Eindringen von Flüssigkeit in den Pumpenkörper verhindern.

13. Spender nach Anspruch 11, dadurch gekennzeichnet, dass er eine Wählvorrichtung (39) in der Form eines zwischen zwei Lagen beweglichen Fingers umfasst:

- einer Lage, in der er in das Innere eines Abteils (11a, 11b) hineinragt und in dem er zwecks Lieferung einer Flüssigkeitsdosis, die geringer ist als der maximale Rauminhalt des Dosierabteils (11b) als Zwischenanschlag für einen Kolbenkopf (12b, 12c) wirkt,

- einer Lage, in der er zurückgezogen ist, so dass er sich ausserhalb des Abteils befindet und in der Verstellung des Kolbens (12) bis in die untere Lage möglich ist.

14. Spender nach einem der vorstehenden Ansprüche für die Ausgabe einer heissen Flüssigkeit, wobei der besagte Spender Mittel zur Isolierung (2) des Speicherbehälters (1), Mittel zum Erhitzen (6) der Flüssigkeit und einen Thermostaten (7) umfasst, der so beschaffen ist, dass er die Erhitzungsmittel (6) bei einer vorgewählten Flüssigkeitstemperatur ausschaltet.

15. Spender nach Anspruch 14, dadurch gekennzeichnet, dass die Erhitzungsmittel elektrische Widerstände (6) umfassen, die auf dem Boden des Behälters zu angeordnet sind, während sich Thermostat (7) im wesentlichen in mittlerer Höhe des besagten Behälters befindet.

16. Spender nach Anspruch 15, dadurch gekennzeichnet, dass er einen elektrischen Füllstandschalter (8) umfasst, der so beschaffen ist, dass er die Versorgung der elektrischen Widerstände (6) unterbricht, wenn der Flüssigkeitsstand im Inneren des Behälters geringer ist als ein vorbestimmter Mindeststand.

Fig. 1

EP 0 281 163 B1

Fig.2

Fig. 3

EP 0 281 163 B1

Fig. 4

Fig. 5

EP 0 281 163 B1

Fig. 6

Fig. 7

EP 0 281 163 B1

6/6